# EUROPEAN PATENT APPLICATION

(11) **EP 4 657 924 A1**
(43) Date of publication of application: **03.12.2025**
(21) Application number: 24756001.4
(22) Date of filing: 01.02.2024
(51) Int. Cl.: H04W 36/00

(54) **CELL HANDOVER METHOD AND APPARATUS**

(30) Priority: 16.02.2023 CN 202310152727
(71) Applicant: Huawei Technologies Co., Ltd., Shenzhen, Guangdong 518129 (CN)
(72) Inventor: GU, Zhifang, Shenzhen, Guangdong 518129 (CN); SHI, Yulong, Shenzhen, Guangdong 518129 (CN); FAN, Qiang, Shenzhen, Guangdong 518129 (CN)
(74) Representative: Pfenning, Meinig & Partner mbB
(86) International application number: PCT/CN2024/075155
(87) International publication number: WO 2024/169627

(57) **Abstract**

Embodiments of this application provide a cell handover method and apparatus, and are applied to the communication field. The cell handover method includes: A terminal device receives a handover command from an access network device; based on configuration information of a source cell group and configuration information of a target cell group, cancels a triggered first buffer status report BSR and/or deletes a data packet corresponding to a first hybrid automatic repeat request HARQ process; and then performs handover to the target cell group based on the handover command. In embodiments of this application, a behavior of partially resetting information at a MAC layer by the terminal device can be specified, to improve continuity of data transmission during cell handover, so as to improve user experience.

## Description

This application claims priority to Chinese Patent Application No. 202310152727.0, filed with the China National Intellectual Property Administration on February 16, 2023 and entitled "CELL HANDOVER METHOD AND APPARATUS", which is incorporated herein by reference in its entirety.

### TECHNICAL FIELD

This application relates to the communication field, and in particular, to a cell handover method and apparatus.

### BACKGROUND

In a mobile communication system, a terminal device may move from a current cell to another cell, causing a communication link between the terminal device and an access network device to change. Consequently, quality of service provided by the current cell deteriorates. Therefore, the access network device indicates, based on movement of the terminal device, the terminal device to perform cell handover.

When the terminal device performs cell handover, the terminal device needs to perform resetting on a media access control (media access control, MAC) layer. A current resetting method includes: (1) canceling a triggered buffer status report (buffer status report, BSR); (2) canceling a triggered scheduling request (scheduling request, SR); (3) clearing a data packet in a hybrid automatic repeat request (hybrid automatic repeat request, HARQ) buffer; (4) stopping running of a timer; and (5) setting a new data indicator (new data indicator, NDI) in a HARQ process to 0.

To ensure service continuity during handover, the terminal device may partially reset information at the MAC layer. Specifically, how to partially reset the information at the MAC layer becomes a technical problem that needs to be urgently resolved currently.

### SUMMARY

Embodiments of this application provide a cell handover method and apparatus, so that a behavior of partially resetting information at a MAC layer by a terminal device can be specified, to improve continuity of data transmission during cell handover, so as to improve user experience.

According to a first aspect, an embodiment of this application provides a cell handover method. The cell handover method may include: A terminal device receives a handover command from an access network device, where the handover command indicates the terminal device to perform handover from a source cell group to a target cell group, and the source cell group and the target cell group each include one or more cells; based on configuration information of the source cell group and configuration information of the target cell group, the terminal device cancels a triggered first buffer status report BSR and/or deletes a data packet corresponding to a first hybrid automatic repeat request HARQ process, where the first BSR is all or a part of BSRs triggered by the terminal device in the source cell group, and the first HARQ process is all or a part of HARQ processes of the terminal device in the source cell group; and the terminal device performs handover to the target cell group based on the handover command.

According to the cell handover method in this embodiment of this application, a BSR that does not exist in the target cell group is canceled by determining the BSRs that have been triggered in the source cell group, to specify a BSR that needs to continue to be maintained in the target cell group, to ensure that a BSR maintained by the terminal device is still valid in the target cell group. A data packet corresponding to a HARQ process that is useless to the target cell group is deleted by determining the HARQ processes, to ensure that a data packet of a HARQ process reserved by the terminal device is valid. In this way, continuity of data transmission during cell handover can be improved, to improve user experience.

With reference to the first aspect, in some implementations of the first aspect, the configuration information of the source cell group includes information indicating a logical channel of the source cell group, and the configuration information of the target cell group includes information indicating a logical channel of the target cell group; and the first BSR includes a regular BSR triggered for a first logical channel, and the first logical channel includes a logical channel that exists in the source cell group but does not exist in the target cell group.

In this way, a BSR of a logical channel group that exists in a source cell but does not exist in a target cell is canceled by determining the BSRs that have been triggered in the source cell group, to specify the BSR that needs to continue to be maintained in the target cell, so as to ensure that the BSR maintained by the terminal device is still valid in the target cell. In this way, processing continuity of a protocol stack during the cell handover is improved, to improve user experience is improved.

It should be understood that "not exist" may be understood as: The logical channel is released in target cell group, or the logical channel is deleted from the target cell group.

With reference to the first aspect, in some implementations of the first aspect, the first logical channel further includes a logical channel that exists in both the source cell group and the target cell group but does not belong to any logical channel group in the target cell group.

In this way, a BSR that exists in both the source cell group and the target cell group but does not belong to any logical channel group in the target cell group is canceled by determining the BSRs that have been triggered in the source cell group, to specify the BSR that needs to continue to be maintained in the target cell, so as to ensure that the BSR maintained by the terminal device is still valid in the target cell. In this way, processing continuity of the protocol stack during the cell handover is improved, to improve user experience.

It should be understood that the terminal device may cancel a regular BSR triggered for a logical channel that does not belong to any logical channel group in the target cell group.

With reference to the first aspect, in some implementations of the first aspect, the configuration information of the target cell group further includes information indicating whether a scheduling request SR delayed triggering characteristic is enabled for each of at least one logical channel of the target cell group. The method further includes: The terminal device determines, based on the configuration information of the target cell group, whether an SR delayed triggering characteristic is enabled for a second logical channel corresponding to a regular BSR that is uncanceled and that is triggered for the second logical channel in the target cell group; and if an SR delayed triggering characteristic is enabled for the second logical channel in the target cell group, after the terminal device performs handover to the target cell group, the terminal device restarts a timer corresponding to the second logical channel.

It should be understood that the terminal device may determine, based on the configuration information of the target cell group, that the regular BSR triggered for the second logical channel is uncanceled, in other words, the regular BSR triggered for the second logical channel is maintained. Further, the terminal device determines, based on the configuration information of the target cell group, whether an SR delayed triggering characteristic is enabled for the second logical channel in the target cell group. If an SR delayed triggering characteristic is enabled for the second logical channel in the target cell group, after the terminal device performs handover to the target cell group, the terminal device restarts the timer corresponding to the second logical channel.

This can effectively prevent the terminal device from considering stopping of the timer as expiration after the terminal device performs handover to the target cell, to reduce frequency of a process of triggering an SR for a regular BSR maintained by the terminal device, so as to avoid a waste of uplink resources.

It should be understood that, for the regular BSR maintained by the terminal device, if the target cell group configures, for a logical channel corresponding to the regular BSR, the SR delayed triggering characteristic for the regular BSR, after the terminal device performs handover to the target cell group, the terminal device may restart a timer corresponding to the logical channel.

With reference to the first aspect, in some implementations of the first aspect, the first BSR includes a triggered padding BSR.

In this way, the padding BSR is canceled by determining the BSRs that have been triggered in the source cell group, to specify the BSR that needs to continue to be maintained in the target cell, so as to ensure that the BSR maintained by the terminal device is still valid in the target cell. In this way, processing continuity of the protocol stack during the cell handover is improved, to improve user experience.

It should be understood that the padding BSR is triggered since an uplink grant resource is sufficient to send to-be-transmitted data and a padding BSR MAC CE. Therefore, the padding BSR is canceled before the terminal device performs cell handover, and does not need to be maintained in the target cell.

With reference to the first aspect, in some implementations of the first aspect, the first BSR does not include a triggered periodic BSR.

In this way, after the terminal device performs handover to the target cell, the terminal device can continue to trigger a BSR at an original period, and provides information about an uplink data buffer status of the terminal device to a network device at a predetermined period, so that the network device appropriately sets an uplink scheduling resource.

It should be understood that, for a periodic BSR that has been triggered in the source cell, the terminal device maintains the periodic BSR in the target cell, and maintains running of a timer of the periodic BSR that has been triggered in the source cell.

With reference to the first aspect, in some implementations of the first aspect, the method further includes: The terminal device continues to maintain a variable corresponding to a logical channel that exists in both the source cell group and the target cell group, where the variable is used for determining a transmission priority of the logical channel corresponding to the variable in uplink transmission.

In this way, continuity of data processing by the terminal device during the cell handover is improved, and fairness of long-term scheduling of different logical channels or different service transmission is ensured.

It should be understood that, during uplink data transmission scheduling by the terminal device, the network device allocates an uplink grant to the terminal device, and the uplink grant indicates an amount of data that can be sent by the terminal device in current uplink transmission. The terminal device forms, based on the uplink grant, a transport block (transport block, TB) by using to-be-sent data. Since the terminal device is configured with different logical channels, how to group data on the different logical channels into a current to-be-transmitted TB may be determined based on importance and historical sending statuses of the different logical channels.

In a possible implementation, for a j^{th} logical channel, the terminal device may maintain a variable Bj used for determining a transmission priority of the logical channel. After the cell handover, Bj is set to 0, and then Bj is gradually accumulated based on Bj=Bj+PBR*T. In the foregoing calculation formula, T is time that elapses from last accumulation to current accumulation, and the prioritized bit rate (prioritized bit rate, PBR) is a parameter configured by the network device. After each time of uplink transmission, Bj is decremented, based on an amount of transmitted data on each logical channel, by the corresponding amount of data.

It should be understood that Bj may become a negative value because of a plurality of times of transmission on the logical channel. In this case, during a next time of uplink scheduling, an amount of data that is on the logical channel and that is grouped into a TB to be transmitted next time may only be small, or data on the logical channel cannot be grouped into a TB for a next time of uplink transmission. In other words, a smaller value of Bj indicates a lower transmission priority of a corresponding logical channel.

In this embodiment of this application, if the terminal device has maintained Bj of the different logical channels before performing cell handover, after the terminal device receives the handover command, if the terminal device partially resets information at a MAC layer, the terminal device may not clear a value of Bj, in other words, the terminal device continues to update and maintain Bj of the source cell in the target cell, or the terminal device maintains only Bj corresponding to a logical channel that still exists in the target cell.

According to different quantities of source cells in the source cell group and target cells in the target cell group, there are two possible implementations for the first HARQ process.

With reference to the first aspect, in some implementations of the first aspect, the source cell group and the target cell group each include one cell, and the first HARQ process includes a HARQ process that exists in the source cell group but does not exist in the target cell group.

With reference to the first aspect, in some implementations of the first aspect, the source cell group and/or the target cell group include/includes a plurality of cells; and the first HARQ process includes: a HARQ process corresponding to a HARQ entity corresponding to a cell that belongs to the source cell group but does not belong to the target cell group; and a HARQ process that exists in a HARQ entity in the source cell group but does not exist in a HARQ entity in the target cell group in HARQ entities corresponding to cells that belong to both the source cell group and the target cell group.

In both the foregoing two possible implementations, data in a HARQ process that needs to continue to be maintained in the target cell can be specified by deleting the HARQ process that exists in the source cell group but does not exist in the target cell group, to ensure that a HARQ process maintained by the terminal device is still valid in the target cell. In this way, processing continuity of the protocol stack during the cell handover is improved, to improve user experience.

According to the cell handover method in this embodiment of this application, after performing handover to the target cell group, the terminal device reserves a data packet corresponding to a HARQ process of the source cell group. In this way, the network device may schedule one time of HARQ retransmission based on a data transmission status of the source cell group, and the terminal device or the network device may combine data transmitted in the target cell group and content in a HARQ buffer reserved from the source cell group and perform decoding to increase a probability of successful decoding. In this way, continuity of data transmission during the handover is improved, to improve user experience.

It should be understood that any cell in the source cell group and/or the target cell group corresponds to one HARQ entity, and one HARQ entity may use a plurality of HARQ processes, in other words, a plurality of HARQ processes may be used in each cell for data transmission.

According to a second aspect, an embodiment of this application provides another cell handover method. The cell handover method may include: A terminal device receives a handover command from an access network device, where the handover command indicates the terminal device to perform handover from a source cell group to a target cell group, and the source cell group and the target cell group each include one or more cells; the terminal device cancels all triggered buffer status reports BSRs; the terminal device performs handover to the target cell group based on the handover command; and the terminal device triggers a BSR based on a handover behavior of the terminal device, or the terminal device triggers a BSR based on a handover behavior of the terminal device in either of the following cases: to-be-transmitted data exists on any logical channel that belongs to any logical channel group in the target cell group; or to-be-transmitted data exists on any logical channel in the target cell group.

In a possible implementation, after completing cell handover, the terminal device triggers a BSR based on the handover behavior of the terminal device.

That the terminal device triggers the BSR based on the handover behavior of the terminal device may be understood as follows: The terminal device directly triggers the BSR based on the handover behavior of the terminal device without performing any condition determining. In other words, there is a direct causal relationship between triggering the BSR by the terminal device and the handover behavior of the terminal device.

In another possible implementation, after completing cell handover, the terminal device determines an uplink data status based on the handover behavior of the terminal device. If to-be-transmitted data exists on any logical channel that belongs to any logical channel group in the target cell group, the terminal device triggers a BSR for the logical channel.

In still another possible implementation, after completing cell handover, the terminal device determines an uplink data status based on the handover behavior of the terminal device. If to-be-transmitted data exists on any logical channel in the target cell group, the terminal device triggers a regular BSR for the logical channel.

In this way, after completing the cell handover, the terminal device can trigger the BSR as soon as possible based on the handover behavior of the terminal device, to enable a network device to perceive a buffer status of to-be-transmitted uplink data of the terminal device as early as possible, so that the network device performs appropriate scheduling, to improve user experience after the handover.

With reference to the second aspect, in some implementations of the second aspect, the cell handover method may further include: The terminal device deletes a data packet corresponding to a first HARQ process, where the first HARQ process is all or a part of HARQ processes of the terminal device in the source cell group.

With reference to the second aspect, in some implementations of the second aspect, the source cell group and the target cell group each include one cell, and the first HARQ process includes a HARQ process that exists in the source cell group but does not exist in the target cell group.

With reference to the second aspect, in some implementations of the second aspect, the source cell group and/or the target cell group include/includes a plurality of cells; and the first HARQ process includes: a HARQ process corresponding to a HARQ entity corresponding to a cell that belongs to the source cell group but does not belong to the target cell group; and a HARQ process that exists in a HARQ entity in the source cell group but does not exist in a HARQ entity in the target cell group in HARQ entities corresponding to cells that belong to both the source cell group and the target cell group.

According to a third aspect, an embodiment of this application provides a cell handover apparatus, configured to perform the method according to any one of the foregoing aspects or the possible implementations of the foregoing aspects. Specifically, the apparatus includes a module configured to perform the method according to any one of the foregoing aspects or the possible implementations of the foregoing aspects.

In a design, the apparatus may include a module in one-to-one correspondence to the method/operation/step/action described in any one of the foregoing aspects or the possible implementations of the foregoing aspects. The module may be a hardware circuit, or may be software, or may be implemented by a hardware circuit in combination with software.

In another design, the apparatus is a communication chip. The communication chip may include an input circuit or an interface configured to send information or data, and an output circuit or an interface configured to receive information or data.

In another design, the apparatus is a communication device. The communication device may include a transmitter machine configured to send information or data and a receiver machine configured to receive information or data.

In another design, the apparatus is configured to perform the method according to any one of the foregoing aspects or the possible implementations of the foregoing aspects. The apparatus may be disposed in the terminal device, or the apparatus is the terminal device.

According to a fourth aspect, an embodiment of this application provides another cell handover apparatus, including a processor, where the processor is coupled to a storage, the storage is configured to store a computer program, and when the processor invokes the computer program, a terminal device is enabled to perform the cell handover method described in any one of the aspects or the possible implementations of the aspects.

Optionally, there are one or more processors, and there are one or more storages.

Optionally, the storage may be integrated with the processor, or the storage may be disposed separately from the processor.

Optionally, the apparatus further includes a transmitter machine (transmitter) and a receiver machine (receiver). The transmitter machine and the receiver machine may be separately disposed, or may be integrated together, and are referred to as a transceiver machine (transceiver).

According to a fifth aspect, a processor is provided. The processor includes an input circuit, an output circuit, and a processing circuit. The processing circuit is configured to receive a signal through the input circuit, and transmit a signal through the output circuit, to enable the processor to perform the method according to any one of the foregoing aspects or the possible implementations of the foregoing aspects.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter, and transmitted by the transmitter, and the input circuit and the output circuit may be a same circuit, where the circuit is used as the input circuit and the output circuit at different moments. Specific implementations of the processor and the various circuits are not limited in embodiments of this application.

According to a sixth aspect, an embodiment of this application provides a computer-readable storage medium. The computer-readable storage medium is configured to store a computer program, and the computer program includes instructions used for implementing the cell handover method according to any one of the aspects or the possible implementations of the aspects.

According to a seventh aspect, an embodiment of this application provides a computer program product. The computer program product includes computer program code. When the computer program code is run on a computer, the computer is enabled to implement the cell handover method according to any one of the aspects or the possible implementations of the aspects.

### BRIEF DESCRIPTION OF DRAWINGS

FIG. 1 is a diagram of a communication system according to an embodiment of this application;
FIG. 2 is a diagram of a CU-DU split architecture according to an embodiment of this application;
FIG. 3 is a schematic flowchart of an LTM cell handover method according to an embodiment of this application;
FIG. 4 is a schematic flowchart of a cell handover method according to an embodiment of this application;
FIG. 5 is a diagram of a cell handover scenario according to an embodiment of this application;
FIG. 6 is a schematic flowchart of another cell handover method according to an embodiment of this application;
FIG. 7 is a block diagram of a cell handover apparatus according to an embodiment of this application; and
FIG. 8 is a block diagram of another cell handover apparatus according to an embodiment of this application.

### DESCRIPTION OF EMBODIMENTS

The following describes technical solutions of this application with reference to the accompanying drawings.

To clearly describe the technical solutions in embodiments of this application, terms such as "first" and "second" are used in embodiments of this application to distinguish between same items or similar items that have basically the same functions and purposes. A person skilled in the art may understand that the terms such as "first" and "second" do not limit a quantity or an execution sequence, and the terms such as "first" and "second" do not indicate a definite difference.

It should be noted that in embodiments of this application, the term "example", "for example", or the like is used to represent giving an example, an illustration, or a description. Any embodiment or design scheme described as an "example" or "for example" in this application should not be explained as being more preferred or having more advantages than another embodiment or design scheme. Exactly, use of the term "example", "for example", or the like is intended to present a related concept in a specific manner.

In embodiments of this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 5th generation (5th generation, 5G) system or new radio (new radio, NR), and a new system that may appear in the future.

A terminal device in embodiments of this application may also be referred to as user equipment (user equipment, UE), a mobile station (mobile station, MS), a mobile terminal (mobile terminal, MT), an access terminal, a subscriber unit, a subscriber station, a mobile station, a remote station, a remote terminal, a mobile device, a user terminal, a terminal, a wireless communication device, a user agent, a user apparatus, or the like.

The terminal device may be a device that provides speech/data connectivity for a user, for example, a handheld device or a vehicle-mounted device that has a wireless connection function. Currently, examples of some terminals are as follows: a mobile phone (mobile phone), a tablet computer, a notebook computer, a handheld computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a 5G network, and a terminal device in a future evolved public land mobile network (public land mobile network, PLMN). This is not limited in embodiments of this application.

By way of example but not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on a body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In addition, in embodiments of this application, the terminal device may alternatively be a terminal device in an internet of things (internet of things, IoT) system. An IoT is an important part of future development of information technologies, and a main technical feature of the IoT is to connect things to a network by using a communication technology, to implement an intelligent network for human-machine interconnection or interconnection between things.

In addition, a network device in embodiments of this application may be a device used to communicate with a terminal device. The network device may also be referred to as an access network device or a wireless access network device, and may be a transmission reception point (transmission reception point, TRP), an evolved NodeB (evolved NodeB, eNB or eNodeB) in the LTE system, a home base station (for example, a home evolved NodeB or a home NodeB, HNB), a baseband unit (baseband unit, BBU), or a wireless controller in a cloud radio access network (cloud radio access network, CRAN) scenario. Alternatively, the network device may be a relay station, an access point, a vehicle-mounted device, a wearable device, a network device in a 5G network, a network device in a future evolved PLMN network, or the like; or may be an access point (access point, AP) in a WLAN or a gNB in a new radio (new radio, NR) system. This is not limited in embodiments of this application.

In a network structure, a network device may include a central unit (central unit, CU) node, a distributed unit (distributed unit, DU) node, or a RAN device including the CU node and the DU node, or a RAN device including a control plane CU node (CU-CP node), a user plane CU node (CU-UP node), and the DU node.

The network device provides a service for a cell, and a terminal device uses a transmission resource (for example, a frequency domain resource, or a spectrum resource) allocated by the network device to communicate with the cell. The cell may belong to a macro base station (for example, a macro eNB or a macro gNB), or may belong to a base station corresponding to a small cell (small cell). The small cell herein may include: a metro cell (metro cell), a micro cell (micro cell), a pico cell (pico cell), a femto cell (femto cell), or the like. These small cells have characteristics of small coverage and low transmit power, and are applicable to providing a high-speed data transmission service.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, a computer-readable medium may include but is not limited to: a magnetic storage component (for example, a hard disk drive, a floppy disk, or a magnetic tape), an optical disc (for example, a compact disc (compact disc, CD) or a digital versatile disc (digital versatile disc, DVD)), a smart card and a flash memory component (for example, erasable programmable read-only memory (erasable programmable read-only memory, EPROM), a card, a stick, or a key drive). In addition, various storage media described in this specification may represent one or more devices and/or another machine-readable medium that are configured to store information. The term "machine-readable medium" may include but is not limited to a radio channel, and various other media that can store, contain and/or carry an instruction and/or data.

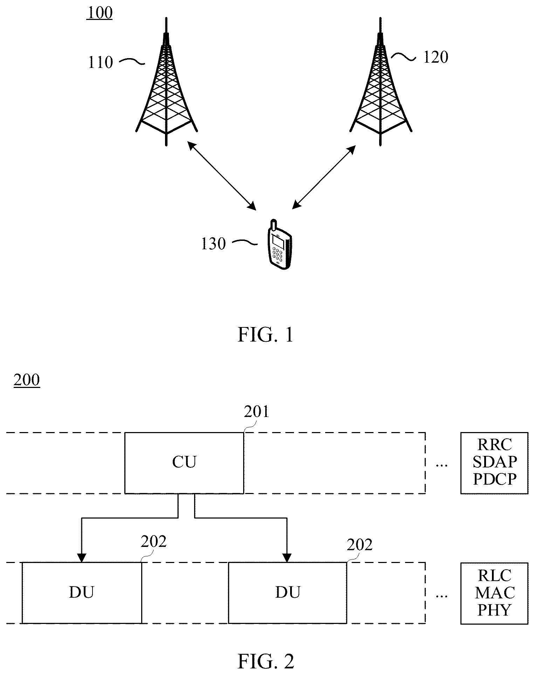

For ease of understanding embodiments of this application, a communication system applicable to embodiments of this application is first described in detail with reference to FIG. 1.

FIG. 1 shows a communication system 100 to which embodiments of this application are applied. The communication system 100 may include at least two network devices, for example, a first network device 110 and a second network device 120. The network device 110 and the network device 120 each are a device that communicates with a terminal device, for example, a base station or a base station controller. Each network device may provide communication coverage for a specific geographical area, and may communicate with a terminal device located in a coverage area (cell). The wireless communication system 100 further includes a terminal device 130 located in a coverage area of the network device 110 and/or the network device 120. The terminal device 130 may be mobile.

FIG. 1 shows an example in which there are two network devices and one terminal device. Optionally, the communication system 100 may include a plurality of network devices, and another quantity of terminal devices may be included in a coverage area of each network device. This is not limited in embodiments of this application.

A plurality of antennas may be configured for each communication device, for example, the network device 110, the network device 120, or the terminal device 130 in FIG. 1. The plurality of antennas may include at least one transmit antenna configured to send a signal and at least one receive antenna configured to receive a signal. In addition, each communication device further additionally includes a transmitter machine chain and a receiver machine chain. A person of ordinary skill in the art may understand that both the transmitter chain and the receiver chain may include a plurality of components (for example, a processor, a modulator, a multiplexer, a demodulator, a demultiplexer, or an antenna) related to signal sending and receiving. Therefore, the network device may communicate with the terminal devices through a multi-antenna technology.

Optionally, the wireless communication system 100 may further include another network entity, for example, a network controller or a mobility management entity. This is not limited in embodiments of this application.

For ease of understanding, the following first describes related terms in embodiments of this application.

### 1. Cell (cell)

The cell is described from a perspective of resource management, mobility management, or a service unit. A coverage range of each network device may be divided into one or more cells, and the cell may be considered as including a specific frequency domain resource. The cell may be a region within a coverage range of a wireless network of the network device.

In a possible implementation, different cells may correspond to different network devices. For example, a network device to which a cell #1 belongs and a network device to which a cell #2 belongs may be different network devices, for example, base stations. In other words, the cell #1 and the cell #2 may be managed by different base stations.

In another possible implementation, different cells may correspond to a same network device. For example, a network device to which a cell #1 belongs and a network device to which a cell #2 belongs are a same network device, for example, a base station. In other words, the cell #1 and the cell #2 may be managed by a same base station. This case may be referred to as that the cell #1 and the cell #2 are co-site or are in a same site. Further, the network device to which the cell #1 belongs and the network device to which the cell #2 belongs may alternatively be different radio frequency processing units of a same base station, for example, radio remote units (radio remote units, RRUs). In other words, the cell #1 and the cell #2 may be managed by the same base station and have a same baseband processing unit and a same intermediate frequency processing unit, but have different radio frequency processing units. This is not specifically limited in this application.

Cell handover is handover that needs to be performed in a wireless communication system to maintain uninterrupted communication of a terminal device when the terminal device moves from a cell to another cell. In this specification, a source cell indicates a cell that provides a service for a terminal device before handover, and a target cell indicates a cell that provides a service for the terminal device after the handover. In other words, the source cell is a serving cell before the terminal device performs cell handover, and the target cell is a serving cell after the terminal device performs cell handover. It should be understood that a cell is a coverage area of a network device, and a source cell corresponds to a source network device (for example, a source base station), and a target cell corresponds to a target network device (for example, a target base station).

### 2. CU-DU split architecture

The CU-DU split architecture is a structure of a network device. The network device is divided into one CU and at least one DU. The CU and the DU may be independently deployed. Some functions of the network device are implemented in the CU, and remaining functions are implemented in the DU, to better meet requirements of various scenarios and applications.

FIG. 2 is a diagram of a CU-DU split architecture. As shown in FIG. 2, the CU-DU split architecture 200 may include a CU 201 and two DUs 202. Each DU 202 is connected to the CU through a logical interface that defines an F1 application protocol (F1 application protocol, F1AP). The CU 201 is configured to process related operations of a service data adaptation protocol (service data adaptation protocol, SDAP) layer, a radio resource control (radio resource control, RRC) layer, and a packet data convergence protocol (packet data convergence protocol, PDCP) layer. The DU 202 is configured to process related operations of a radio link control protocol (radio link control, RLC) layer, a media access control (media access control, MAC) layer, and a physical layer (physical layer, PHY).

### 3. L1/L2 triggered mobility (L1/L2 triggered mobility, LTM)

L1 refers to a physical layer, and L2 refers to one or more of MAC, RLC, PDCP, and SDAP layers. L1/L2 may also be understood as L1 and/or L2. In other words, L1 and/or L2 mainly participate in an LTM handover process.

When performing cell handover based on the LTM, a terminal device sends a measurement result of an L1 layer of the terminal device to a network device by using physical layer control signaling (for example, a physical uplink control channel (physical uplink control channel, PUCCH)). A physical layer of the network device reads the measurement result of the L1 layer, makes a handover decision based on the measurement result of the L1 layer, and sends the handover decision to the terminal device by using L1 and/or L2 signaling. The L1 and/or L2 signaling may be a message carried on a physical downlink control channel (physical downlink control channel, PDCCH), or may be a MAC control element (control element, CE). L1/L2 handover means that a handover-related operation is mainly performed at a physical layer and a MAC layer, and the L1/L2 handover may also be referred to as bottom-layer handover, lower-layer handover, or the like. A name of the L1/L2 handover is not limited in embodiments of this application.

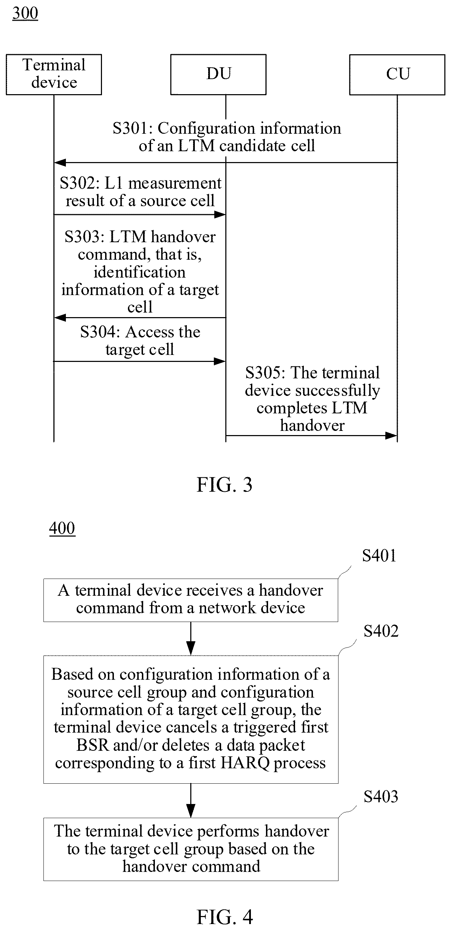

The following uses cell handover in a same DU in a CU-DU split architecture as an example to describe an LTM handover procedure. FIG. 3 is a schematic flowchart of an LTM handover method 300. The method 300 includes the following steps.

S301: A CU sends configuration information of an LTM candidate cell to a terminal device through a DU. Correspondingly, the terminal device receives the configuration information of the candidate cell.

S302: The terminal device measures a reference signal of a source cell and/or a reference signal of the candidate cell based on the configuration information of the LTM candidate cell, and reports a measurement result to the DU. Correspondingly, the DU receives the measurement result reported by the terminal device.

For example, the measurement result is an L1 measurement result, and includes at least one of the following: an L1 measurement result of the source cell and an L1 measurement result of at least one candidate cell.

It should be understood that the L1 measurement result of the source cell and/or the candidate cell may be a cell-level L1 measurement result, for example, cell-level reference signal received power (reference signal received power, RSRP), or may be a beam-level L1 measurement result, for example, beam-level RSRP. This is not limited in this application.

S303: The DU makes a handover decision based on the measurement result, and sends an LTM handover command to the terminal device. Correspondingly, the terminal device receives the LTM handover command.

For example, when signal quality of a candidate cell is better than signal quality of the source cell, the DU makes a decision of performing handover to the candidate cell. In this case, the candidate cell may also be referred to as a target cell.

It should be understood that the LTM handover command is L1 and/or L2 signaling, and includes identification information of the target cell. Further, the LTM handover command further includes information indicating a beam direction that should be used by the terminal device when the terminal device communicates with the target cell.

S304: The terminal device performs cell handover based on the LTM handover command.

For example, the terminal device may access the target cell by using the configuration information of the target cell received in S301, and start to perform uplink/downlink data transmission with the target cell after successfully accessing the target cell.

It should be understood that the terminal device may access the target cell in a random access manner, or the terminal device may access the target cell in a random access-free manner. This is not limited in embodiments of this application.

S305: The DU sends, to the CU, information indicating that the terminal device successfully completes the cell handover. Correspondingly, the CU receives the information.

For example, the information indicating that the terminal device successfully completes the cell handover may carry the identification information of the target cell.

It should be understood that, in this application, that the terminal device communicates with a cell may be understood as that the terminal device communicates with an access network device to which the cell belongs.

### 4. MAC behavior during handover

When a terminal device performs cell handover, the terminal device needs to perform resetting a MAC layer. A current resetting method includes: (1) canceling a triggered buffer status report (buffer status report, BSR); (2) canceling a triggered scheduling request (scheduling request, SR); (3) clearing a data packet in a hybrid automatic repeat request (hybrid automatic repeat request, HARQ) buffer; (4) stopping running of a timer; and (5) setting a new data indicator (new data indicator, NDI) in a HARQ process to 0.

The BSR is used by the terminal device to report an uplink data buffer status of the terminal device to a network device, in other words, report an amount of data that is on each logical channel group (logical channel group, LCG) and that can be used for uplink sending. BSRs may be classified into a regular BSR, a periodic BSR, and a padding BSR based on different BSR triggering manners. The following separately describes the foregoing three types of BSRs in detail.

### (1) Regular BSR

For a logical channel (logical channel, LCH) belonging to an LCG, if there is new data that can be used for sending on the LCH, and a priority of the LCH is higher than a priority of another LCH that can be used for sending data, the terminal device triggers a regular BSR for the LCH; or if there is new data that can be used for sending on the LCH, and there is no data that can be used for sending on another LCH, the terminal device triggers a regular BSR for the LCH.

### (2) Periodic BSR

The terminal device maintains a timer. After the timer expires, the terminal device triggers a periodic BSR.

### (3) Padding BSR

When an amount of data that is allowed to be sent in uplink scheduling is greater than an amount of data that a terminal device actually needs to transmit, if remaining space is sufficient to send a padding BSR MAC CE, the terminal device triggers a padding BSR.

It should be understood that a BSR is reported at a granularity of an LCG, and a regular BSR is triggered at a granularity of an LCH. One LCG includes one or more LCHs. Reporting at the granularity of the LCG can reduce signaling overheads for reporting of the BSR.

In a wireless communication network, when needing to transmit uplink data to the network device, the terminal device needs to first apply to the network device for an uplink grant resource. After a BSR is triggered, the terminal device needs to send a BSR MAC CE. However, when the terminal device does not have an available uplink grant resource to send the BSR MAC CE, the terminal device needs to initiate a scheduling request (scheduling request, SR) process, to request an uplink grant from the network device. To avoid frequent SR triggering, when a regular BSR of an LCH is triggered, the terminal device starts an SR delayed triggering timer of the LCH, and the terminal device triggers the SR process only when the timer expires.

It should be understood that, avoiding frequent SR triggering may be referred to as an "SR delayed triggering characteristic", and the SR delayed triggering characteristic is configurable. When a parameter corresponding to an SR delayed triggering characteristic of an LCH is configured as "true (true)", the foregoing characteristic takes effect for a BSR of the LCH.

To ensure service continuity during handover, the terminal device may partially reset information at the MAC layer. For example, in a cell handover scenario, a partial reset is performed on a MAC layer of each of a network device and a terminal device, to maintain continuity of an L2 processing process as much as possible, reduce handover interruption time, and improve service experience during handover.

A specific behavior of a partial reset on the MAC may include: (1) maintaining a triggered BSR; and (2) reserving a data packet in a HARQ buffer.

For (1), the terminal device may partially reset the information at the MAC layer by maintaining the triggered BSR. In this way, after performing handover to the target cell, the terminal device may send a BSR of the terminal device to the network device as soon as possible, so that the network device can appropriately schedule a data transmission process, to improve user experience after the handover. However, the terminal device cannot determine whether the maintained triggered BSR is still valid in the target cell. For example, the terminal device triggers BSRs on both a logical channel 1 (LCH 1) and a logical channel 2 (LCH 2) in the source cell, but the LCH 2 is released in or deleted from the target cell. In this case, the BSR triggered on the LCH 2 is invalid in the target cell, and a maintenance behavior of the terminal device on the BSR triggered on the LCH 2 is unclear.

For (2), the terminal device may partially reset the information at the MAC layer by reserving the data packet in the HARQ buffer. In this way, after the terminal device performs handover to the target cell, the network device may schedule HARQ retransmission for the terminal device, to help improve continuity of a data transmission process, so as to improve user experience. However, the terminal device cannot determine a HARQ buffer in which a data packet needs to be maintained. For example, the source cell includes eight HARQ processes, but there are only four HARQ processes in the target cell. In this case, the terminal device only needs to maintain data packets in four HARQ buffers, and data packets in the other four HARQ buffers do not need to be maintained. A specific behavior of maintaining the data packets in the HARQ buffers by the terminal device is unclear.

In conclusion, how the terminal device partially resets the information at the MAC layer, to be specific, how to process the BSR triggered in the source cell and how to process data content in the HARQ buffer, becomes a technical problem that needs to be urgently resolved currently.

In view of this, in an embodiment of this application, only a BSR that is still valid in the target cell is reserved and a BSR that is invalid in the target cell is canceled by selectively maintaining BSRs that have been triggered in the source cell; and only a data packet in a HARQ buffer that is still valid in the target cell is reserved by selectively maintaining data packets in HARQ buffers. This resolves a technical problem of partially resetting the information at the MAC layer, and specifies a behavior of partially resetting the information at the MAC layer by the terminal device, to improve continuity of data transmission during cell handover, so as to improve user experience.

With reference to FIG. 4, the following describes in detail a cell handover method provided in an embodiment of this application.

FIG. 4 is a schematic flowchart of a cell handover method 400 according to an embodiment of this application. The method 400 may be applied to the communication system 100 shown in FIG. 1 and the CU-DU split architecture 200 shown in FIG. 2. However, this is not limited in embodiments of this application. As shown in FIG. 4, the method 400 may include the following steps.

S401: A terminal device receives a handover command from a network device.

The handover command indicates the terminal device to perform handover from a source cell group to a target cell group, and the source cell group and the target cell group each include one or more cells.

In a possible implementation, the source cell group includes a cell #1 and a cell #2, and the target cell group includes a cell #3. The handover command may include: handover from the source cell group to the target cell group.

It should be understood that, when the source cell group includes one cell, the source cell group may be referred to as a source cell. Similarly, when the target cell group includes one cell, the target cell group may also be referred to as a target cell.

S402: Based on configuration information of the source cell group and configuration information of the target cell group, the terminal device cancels a triggered first BSR and/or deletes a data packet corresponding to a first HARQ process.

The first BSR is all or a part of BSRs triggered by the terminal device in the source cell group, and the first HARQ process is all or a part of HARQ processes of the terminal device in the source cell group. In this application, deleting a data packet corresponding to a HARQ process may also be understood as clearing or flushing a buffer of the HARQ process.

S403: The terminal device performs handover to the target cell group based on the handover command.

According to the cell handover method in this embodiment of this application, a BSR that does not exist in the target cell group is canceled by determining the BSRs that have been triggered in the source cell group, to specify a BSR that needs to continue to be maintained in the target cell group, to ensure that a BSR maintained by the terminal device is still valid in the target cell group. A data packet corresponding to a HARQ process that is useless to the target cell group is deleted by determining the HARQ processes, to ensure that a data packet of a HARQ process reserved by the terminal device is valid. In this way, continuity of data transmission during cell handover can be improved, to improve user experience.

In an optional embodiment, the configuration information of the source cell group includes information indicating a logical channel of the source cell group, and the configuration information of the target cell group includes information indicating a logical channel of the target cell group; and the first BSR includes a regular BSR triggered for a first logical channel, and the first logical channel includes a logical channel that exists in the source cell group but does not exist in the target cell group.

It should be understood that "not exist" may be understood as: The logical channel is released in target cell group, or the logical channel is deleted from the target cell group.

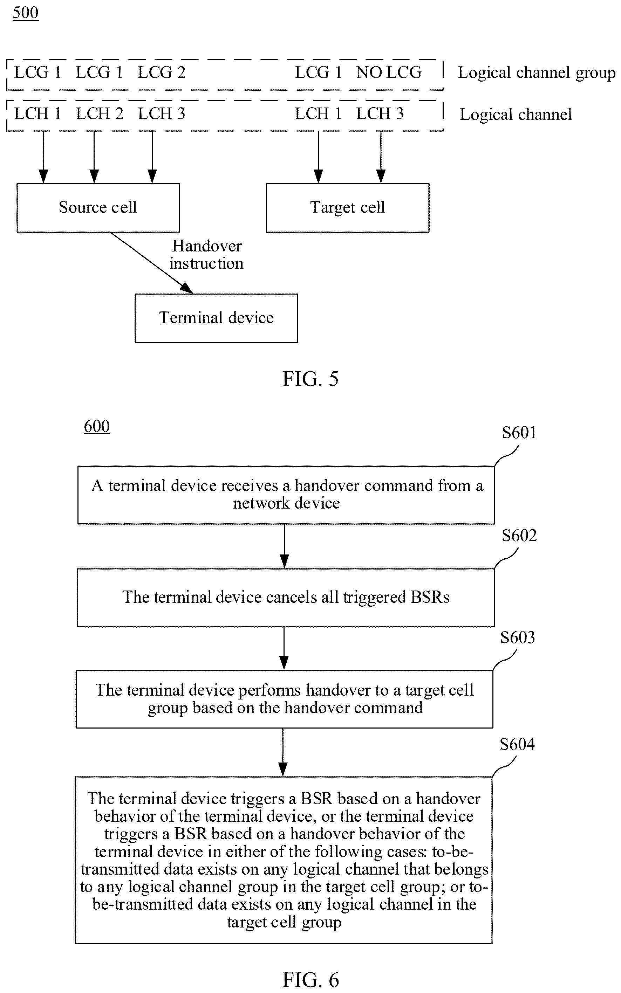

FIG. 5 is a diagram of a cell handover scenario 500 according to an embodiment of this application. Both a source cell group and a target cell group include one cell. Logical channels corresponding to a source cell include an LCH 1, an LCH 2, and an LCH 3. The LCH 1 and the LCH 2 belong to an LCG 1. The LCH 3 belongs to an LCG 2. Logical channels corresponding to a target cell include the LCH 1 and the LCH 3. The LCH 1 belongs to the LCG 1, and the LCH 3 does not belong to any LCG. In FIG. 5, the handover command may be: handover from the source cell to the target cell.

It can be learned from FIG. 5 that the LCH 2 exists in the source cell but does not exist in the target cell, and a terminal device may cancel a regular BSR triggered for the LCH 2. In other words, the first BSR includes the regular BSR triggered for the LCH 2.

In this way, a BSR of a logical channel group that exists in the source cell group but does not exist in the target cell group is canceled by determining the BSRs that have been triggered in the source cell group, to specify a BSR that needs to continue to be maintained in the target cell group, to ensure that a BSR maintained by the terminal device is still valid in the target cell group. In this way, processing continuity of a protocol stack during the cell handover is improved, to improve user experience.

In an optional embodiment, the first logical channel further includes a logical channel that exists in both the source cell group and the target cell group but does not belong to any logical channel group in the target cell group.

It should be understood that the terminal device may cancel a regular BSR triggered for a logical channel that does not belong to any logical channel group in the target cell group. For example, in FIG. 5, the LCH 3 exists in the source cell, belongs to the LCG 2 in the source cell, and exists in the target cell 402. However, the LCH 3 does not belong to any logical channel group in the target cell. Therefore, the terminal device may cancel a regular BSR triggered for the LCH 3. In other words, the first BSR includes the regular BSR triggered for the LCH 3.

In this way, a BSR that exists in both the source cell group and the target cell group but does not belong to any logical channel group in the target cell group is canceled by determining the BSRs that have been triggered in the source cell group, to specify the BSR that needs to continue to be maintained in the target cell group, to ensure that the BSR maintained by the terminal device is still valid in the target cell group. In this way, processing continuity of the protocol stack during the cell handover is improved, to improve user experience.

In an optional embodiment, the configuration information of the target cell group further includes information indicating whether a scheduling request SR delayed triggering characteristic is enabled for each of at least one logical channel of the target cell group. The method 400 further includes: The terminal device determines, based on the configuration information of the target cell group, that a regular BSR triggered for a second logical channel is uncanceled; further, the terminal device determines, based on the configuration information of the target cell group, whether an SR delayed triggering characteristic is enabled for the second logical channel in the target cell group; and if an SR delayed triggering characteristic is enabled for the second logical channel in the target cell group, after the terminal device performs handover to the target cell group, the terminal device restarts a timer corresponding to the second logical channel.

The timer may also be referred to as an SR delayed triggering timer or another name. This is not limited in embodiments of this application.

It should be understood that, for the regular BSR maintained by the terminal device, if the target cell group configures, for a logical channel corresponding to the regular BSR, the SR delayed triggering characteristic for the regular BSR, after the terminal device performs handover to the target cell group, the terminal device may restart an SR delayed triggering timer corresponding to the logical channel.

In a possible implementation, the target cell configures, for the logical channel corresponding to the regular BSR, the SR delayed triggering characteristic for the regular BSR, in other words, a parameter of a timer corresponding to the regular BSR is "true". In this case, the terminal device may consider, in the target cell, that a new regular BSR is triggered, and therefore restarts the timer corresponding to the logical channel.

This can effectively prevent the terminal device from considering stopping of the timer as expiration after the terminal device performs handover to the target cell, to reduce frequency of a process of triggering an SR for a regular BSR maintained by the terminal device, so as to avoid a waste of uplink resources.

In an optional embodiment, the first BSR includes a triggered padding BSR.

It should be understood that the padding BSR is triggered since an uplink grant resource is sufficient to send to-be-transmitted data and a padding BSR MAC CE. Therefore, the padding BSR is canceled before the terminal device performs cell handover, and does not need to be maintained in the target cell.

In this way, the padding BSR is canceled by determining the BSRs that have been triggered in the source cell group, to specify the BSR that needs to continue to be maintained in the target cell, so as to ensure that the BSR maintained by the terminal device is still valid in the target cell. In this way, processing continuity of the protocol stack during the cell handover is improved, to improve user experience.

In an optional embodiment, the first BSR does not include a triggered periodic BSR.

For a periodic BSR that has been triggered in the source cell, the terminal device maintains the periodic BSR in the target cell, and maintains running of a timer of the periodic BSR that has been triggered in the source cell.

In this way, after the terminal device performs handover to the target cell, the terminal device can continue to trigger a BSR at an original period, and provides information about an uplink data buffer status of the terminal device to a network device at a predetermined period, so that the network device appropriately sets an uplink scheduling resource.

In an optional embodiment, the method 400 further includes: The terminal device continues to maintain a variable corresponding to a logical channel that exists in both the source cell group and the target cell group, where the variable is used for determining a transmission priority of the logical channel corresponding to the variable in uplink transmission.

It should be understood that, during uplink data transmission scheduling by the terminal device, the network device allocates an uplink grant to the terminal device, and the uplink grant indicates an amount of data that can be sent by the terminal device in current uplink transmission. The terminal device forms, based on the uplink grant, a transport block (transport block, TB) by using to-be-sent data. Since the terminal device is configured with different logical channels, how to group data on the different logical channels into a current to-be-transmitted TB may be determined based on importance and historical sending statuses of the different logical channels.

For example, for a j^{th} logical channel, the terminal device may maintain a variable Bj used for determining a transmission priority of the logical channel. After the cell handover, Bj is set to 0, and then Bj is gradually accumulated based on Bj=Bj+PBR*T. In the foregoing calculation formula, T is time that elapses from last accumulation to current accumulation, and the prioritized bit rate (prioritized bit rate, PBR) is a parameter configured by the network device. After each time of uplink transmission, Bj is decremented, based on an amount of transmitted data on each logical channel, by the corresponding amount of data. For example, if an amount of transmitted data on the j^{th} logical channel in current transmission is x bits, Bj=Bj-x.

In a possible implementation, B1 of a logical channel 1 is 5, and B2 of a logical channel 2 is 4. This indicates that a transmission priority of the logical channel 1 is higher than a transmission priority of the logical channel 2. After one time of transmission, an amount of transmitted data on the logical channel 1 is 3 bits, and an amount of transmitted data on the logical channel 2 is 1 bit. In this case, B1 of the logical channel 1 is 2, and B2 of the logical channel 2 is 3. In this case, the transmission priority of the logical channel 2 is higher than the transmission priority of the logical channel 1 in a next time of data transmission.

It should be understood that Bj may become a negative value because of a plurality of times of transmission on the logical channel. In this case, during a next time of uplink scheduling, an amount of data that is on the logical channel and that is grouped into a TB to be transmitted next time may only be small, or data on the logical channel cannot be grouped into a TB for a next time of uplink transmission. In other words, a smaller value of Bj indicates a lower transmission priority of a corresponding logical channel.

In this embodiment of this application, if the terminal device has maintained Bj of the different logical channels before performing cell handover, after the terminal device receives the handover command, if the terminal device partially resets information at a MAC layer, the terminal device may not clear a value of Bj, in other words, the terminal device continues to update and maintain Bj of the source cell in the target cell, or the terminal device maintains only Bj corresponding to a logical channel that still exists in the target cell. In this way, continuity of data processing by the terminal device during the cell handover is improved, and fairness of long-term scheduling of different logical channels or different service transmission is ensured.

In an optional embodiment, the source cell group and the target cell group each include one cell, and the first HARQ process includes a HARQ process that exists in the source cell group but does not exist in the target cell group.

In an optional embodiment, the source cell group and/or the target cell group include/includes a plurality of cells; and the first HARQ process includes: a HARQ process corresponding to a HARQ entity corresponding to a cell that belongs to the source cell group but does not belong to the target cell group; and a HARQ process that exists in a HARQ entity in the source cell group but does not exist in a HARQ entity in the target cell group in HARQ entities corresponding to cells that belong to both the source cell group and the target cell group.

It should be understood that any cell in the source cell group and/or the target cell group corresponds to one HARQ entity, and one HARQ entity may use a plurality of HARQ processes, in other words, a plurality of HARQ processes may be used in each cell for data transmission.

For example, the terminal device may use a multi-cell communication technology, for example, a carrier aggregation (carrier aggregation, CA) technology. A source network device has one primary cell (primary cell, PCell) and one secondary cell (secondary cell, SCell). The two cells may be referred to as a source cell group. The two cells correspond to two HARQ entities that are respectively denoted as a HARQ entity 1 and a HARQ entity 2. The HARQ entity 1 may use X HARQ processes, the HARQ entity 2 may use Y HARQ processes, where X may be equal or not equal to Y.

After the terminal device receives the handover command, if the terminal device determines that, for current handover, a behavior to be performed on the MAC layer is partial reset, or data in the HARQ buffer needs to be reserved, the terminal device may perform the following two levels of determining on how to maintain buffered content in the HARQ process.

In first-level determining, the terminal device compares IDs of cells in the target cell group and IDs of cells in the source cell group. For IDs of cells that still exist in the source cell group and the target cell group, the terminal device performs second-level determining on HARQ processes of HARQ entities corresponding to these cells. For IDs of cells that exist only in the source cell group, the terminal device clears data content in buffers of all HARQ processes of HARQ entities corresponding to the cells. For IDs of cells that exist only in the target cell group, indicating that HARQ entities of these cells do not exist in the source cell, the terminal device does not need to maintain buffer content in HARQ processes of the HARQ entities, and the terminal device newly adds the target cells after handover.

For example, the terminal device has three cells, which are a cell #0, a cell #1, and a cell #2, that provide a communication service in the source cell group. A target cell group indicated by the handover command includes the cell #0 and a cell #3. In this case, the terminal device needs to perform second-level determining on a HARQ entity corresponding to the cell #0. For the cell #1 and the cell #2, the terminal device clears data content in buffers of all HARQ processes of HARQ entities corresponding to the two cells. For the cell #3, after handover, the terminal device newly adds the cell as a cell that provides a communication service.

In the second-level determining, the terminal device compares IDs of HARQ processes of HARQ entities in the source cell group with IDs of HARQ processes of HARQ entities in the target cell group. For IDs of HARQ processes that exist in HARQ entities in the source cell group and IDs of HARQ processes that exist in HARQ entities in the target cell group, the terminal device reserves data content in buffers of these HARQ processes. For IDs of HARQ processes that only exist in the HARQ entities in the source cell group, the terminal device clears content in HARQ buffers of the HARQ processes. For IDs of HARQ processes that only exist in the HARQ entities in the target cell group, indicating that these HARQ processes do not exist in the source cell group, the terminal device does not need to maintain buffer content of the HARQ processes of these HARQ entities.

For example, for a HARQ entity corresponding to the cell #0, a HARQ entity corresponding to the cell #0 in the source cell group of the terminal device has 16 HARQ processes whose IDs are 0 to 15, and a HARQ entity corresponding to the cell #0 in the target cell group has eight HARQ processes whose IDs are 0 to 7. In this case, the terminal device needs to reserve content of buffers of these HARQ processes whose IDs are 0 to 7, and needs to clear content of HARQ buffers of the HARQ processes whose IDs are 8 to 15.

After processes of the first-level determining and the second-level determining, for HARQ processes in which content of a HARQ buffer still needs to be reserved after cell handover, the terminal device continues to maintain new data indicators (new data indicators, NDIs) of these HARQ processes, and does not need to reset the NDIs to 0.

It should be understood that, if the terminal device does not use the multi-cell communication technology and performs only single-cell communication, in other words, when there is one cell included in each of the source cell group and the target cell group, the terminal device may skip the process of the first-level determining, and directly perform the second-level determining.

According to the cell handover method in this embodiment of this application, after performing handover to the target cell group, the terminal device reserves a data packet corresponding to a HARQ process of the source cell group. In this way, the network device may schedule one time of HARQ retransmission based on a data transmission status of the source cell group, and the terminal device or the network device may combine data transmitted in the target cell group and content in a HARQ buffer reserved from the source cell group and perform decoding to increase a probability of successful decoding. In this way, continuity of data transmission during the handover is improved, to improve user experience.

With reference to FIG. 6, the following describes in detail another cell handover method provided in an embodiment of this application.

FIG. 6 is a schematic flowchart of another cell handover method 600 according to an embodiment of this application. The method 600 may be applied to the communication system 100 shown in FIG. 1 and the CU-DU split architecture 200 shown in FIG. 2. However, this is not limited in embodiments of this application. As shown in FIG. 6, the method 600 may include the following steps.

S601: A terminal device receives a handover command from a network device.

The handover command indicates the terminal device to perform handover from a source cell group to a target cell group, and the source cell group and the target cell group each include one or more cells.

S602: The terminal device cancels all triggered BSRs.

S603: The terminal device performs handover to the target cell group based on the handover command.

S604: The terminal device triggers a BSR based on a handover behavior of the terminal device, or the terminal device triggers a BSR based on a handover behavior of the terminal device in either of the following cases: to-be-transmitted data exists on any logical channel that belongs to any logical channel group in the target cell group; or to-be-transmitted data exists on any logical channel in the target cell group.

In a possible implementation, after completing cell handover, the terminal device triggers a BSR based on the handover behavior of the terminal device.

That the terminal device triggers the BSR based on the handover behavior of the terminal device may be understood as follows: The terminal device directly triggers the BSR based on the handover behavior of the terminal device without performing any condition determining. In other words, there is a direct causal relationship between triggering the BSR by the terminal device and the handover behavior of the terminal device.

In another possible implementation, after completing cell handover, the terminal device determines an uplink data status based on the handover behavior of the terminal device. If to-be-transmitted data exists on any logical channel that belongs to any logical channel group in the target cell group, the terminal device triggers a BSR for the logical channel. In still another possible implementation, after completing cell handover, the terminal device determines an uplink data status based on the handover behavior of the terminal device. If to-be-transmitted data exists on any logical channel in the target cell group, the terminal device triggers a regular BSR for the logical channel.

In another possible implementation, the terminal device determines, based on a terminal behavior of current handover, whether to trigger a BSR, where the terminal behavior includes at least one of the following: a reset, or a partial reset, or maintenance at a MAC layer, reestablishment or maintenance at an RLC layer, or reestablishment, or data recovery, or discarding, or maintenance at a PDCP layer.

It should be understood that the terminal behavior may be indicated by the handover command in step S601, or may be indicated by the cell configuration information in step S301. This is not limited in embodiments of this application.

For example, if the terminal behavior of the current handover is a partial reset at the MAC layer, the terminal device may trigger a BSR after completing the handover. For another example, if the terminal behavior of the current handover is maintenance at the RLC layer, the terminal device may trigger a BSR after completing the handover. For still another example, if the terminal behavior of the current handover is maintenance at the PDCP layer, the terminal device may trigger a BSR after completing the handover.

This implementation may be used in combination with the foregoing implementation. For example, when determining that a handover behavior is a partial reset on the MAC layer, and the to-be-transmitted data exists on any logical channel that belongs to any logical channel group in the target cell group, the terminal device may trigger a BSR for the logical channel.

In this embodiment of this application, the terminal device may determine, based on the terminal behavior during the handover, whether to trigger a BSR, to trigger the BSR as early as possible after the handover is completed. For example, when maintenance is performed at RLC layer during the handover, the terminal device maintains data on different logical channels at the RLC layer, and does not clear data on these logical channels at the RLC layer. When the terminal device has newly arrived uplink data to be transmitted in a target cell group, a new BSR may not be triggered since a priority of a logical channel to which the newly arrived uplink data belongs is not higher than that of data on a maintained logical channel. In this case, the terminal device may trigger, by using a technology in this embodiment, a BSR as early as possible after completing the handover, so that the network device perceives a buffer status of to-be-transmitted uplink data of the terminal device as early as possible.

Therefore, according to the cell handover method in this embodiment of this application, after completing the cell handover, the terminal device can trigger the BSR as soon as possible based on the handover behavior of the terminal device, to enable the network device to perceive a buffer status of to-be-transmitted uplink data of the terminal device as early as possible, so that the network device performs appropriate scheduling, to improve user experience after the handover.

Optionally, the method 600 may further include: The terminal device deletes a data packet corresponding to a first HARQ process, where the first HARQ process is all or a part of HARQ processes of the terminal device in the source cell group. For detailed descriptions of the first HARQ process, refer to the foregoing method 400. Details are not described herein again.

It should be understood that sequence numbers of the foregoing processes do not mean execution sequences in embodiments of this application. The execution sequences of the processes should be determined according to functions and internal logic of the processes, and should not be construed as any limitation on the implementation processes of embodiments of this application.

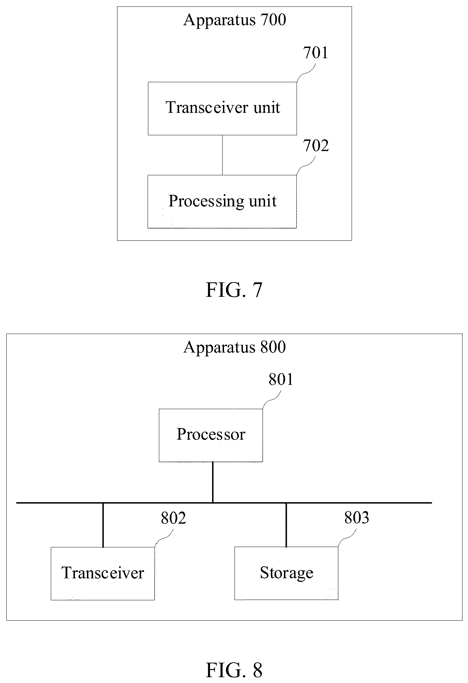

The foregoing describes the cell handover method according to embodiments of this application in detail with reference to FIG. 1 to FIG. 6. The following describes a cell handover apparatus according to embodiments of this application with reference to FIG. 7 and FIG. 8.

FIG. 7 shows a cell handover apparatus 700 according to an embodiment of this application. The apparatus 700 includes a transceiver unit 701 and a processing unit 702.

In a possible implementation, the apparatus 700 is configured to perform procedures and steps corresponding to the terminal device in the method 400.

The transceiver unit 701 is configured to receive a handover command from an access network device, where the handover command indicates the apparatus to perform handover from a source cell group to a target cell group, and the source cell group and the target cell group each include one or more cells. The processing unit 702 is configured to: based on configuration information of the source cell group and configuration information of the target cell group, cancel a triggered first buffer status report BSR and/or delete a data packet corresponding to a first hybrid automatic repeat request HARQ process, where the first BSR is all or a part of BSRs triggered by the apparatus in the source cell group, and the first HARQ process is all or a part of HARQ processes of the apparatus in the source cell group; and perform handover to the target cell group based on the handover command.

In a possible implementation, the configuration information of the source cell group includes information indicating a logical channel of the source cell group, and the configuration information of the target cell group includes information indicating a logical channel of the target cell group; and the first BSR includes a regular BSR triggered for a first logical channel, and the first logical channel includes a logical channel that exists in the source cell group but does not exist in the target cell group.

In a possible implementation, the first logical channel further includes a logical channel that exists in both the source cell group and the target cell group but does not belong to any logical channel group in the target cell group.

In a possible implementation, the configuration information of the target cell group further includes information indicating whether a scheduling request SR delayed triggering characteristic is enabled for each of at least one logical channel of the target cell group; and the processing unit 702 is further configured to determine, based on the configuration information of the target cell group, whether an SR delayed triggering characteristic is enabled for a second logical channel corresponding to a regular BSR that is uncanceled and that is triggered for the second logical channel in the target cell group; and if an SR delayed triggering characteristic is enabled for the second logical channel in the target cell group, after the apparatus performs handover to the target cell group, restart a timer corresponding to the second logical channel.

In a possible implementation, the first BSR includes a triggered padding BSR.

In a possible implementation, the first BSR does not include a triggered periodic BSR.

In a possible implementation, the processing unit 702 is further configured to continue to maintain a variable corresponding to a logical channel that exists in both the source cell group and the target cell group, where the variable is used for determining a transmission priority of the logical channel corresponding to the variable in uplink transmission.

In a possible implementation, the source cell group and the target cell group each include one cell, and the first HARQ process includes a HARQ process that exists in the source cell group but does not exist in the target cell group.

In a possible implementation, the source cell group and/or the target cell group include/includes a plurality of cells; and the first HARQ process includes: a HARQ process corresponding to a HARQ entity corresponding to a cell that belongs to the source cell group but does not belong to the target cell group; and a HARQ process that exists in a HARQ entity in the source cell group but does not exist in a HARQ entity in the target cell group in HARQ entities corresponding to cells that belong to both the source cell group and the target cell group.

In another possible implementation, the apparatus 700 is configured to perform procedures and steps corresponding to the terminal device in the method 600.

The transceiver unit 701 is configured to receive a handover command from an access network device, where the handover command indicates the apparatus to perform handover from a source cell group to a target cell group, and the source cell group and the target cell group each include one or more cells. The processing unit 702 is configured to cancel all triggered buffer status reports BSRs; perform handover to the target cell group based on the handover command; and trigger a BSR based on a handover behavior of the apparatus, or the apparatus triggers a BSR based on a handover behavior of the apparatus in either of the following cases: to-be-transmitted data exists on any logical channel that belongs to any logical channel group in the target cell group; or to-be-transmitted data exists on any logical channel in the target cell group.

In a possible implementation, the processing unit 702 is further configured to delete a data packet corresponding to a first HARQ process, where the first HARQ process is all or a part of HARQ processes of the apparatus in the source cell group.

The apparatus 700 may further include a storage unit. The storage unit may exist independently, and is connected to the processing unit 702 through the communication bus. The storage unit may alternatively be integrated with the processing unit 702.

For example, the apparatus 700 may be a chip or a chip system of an electronic device in embodiments of this application. The storage unit may store computer-executable instructions of a method of the electronic device, so that the processing unit 702 performs the method of the terminal device in the foregoing embodiments. The storage unit may be a register, a cache, a random access memory (random access memory, RAM), or the like. The storage unit may be integrated with the processing unit 702. The storage unit may be a read-only memory (read-only memory, ROM) or another type of static storage device that can store static information and instructions. The storage unit may be independent of the processing unit 702.

It should be understood that the apparatus 700 herein is represented in the form of a functional module. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a storage, a merged logic circuit, and/or another appropriate component that supports the described function. In an optional example, a person skilled in the art may understand that the apparatus 700 may be specifically the terminal device in the foregoing embodiments, and the apparatus 700 may be configured to perform procedures and/or steps corresponding to the terminal device in the foregoing method embodiments. To avoid repetition, details are not described herein again.

The apparatus 700 has a function for implementing the corresponding steps performed in the foregoing method. The function may be implemented by hardware, or may be implemented by hardware executing corresponding software. The hardware or the software includes one or more modules corresponding to the function. For example, the transceiver unit 701 may include a sending unit and a receiving unit. The sending unit may be configured to implement steps and/or procedures that correspond to the transceiver unit and that are used to perform a sending action. The receiving unit may be configured to implement steps and/or procedures that correspond to the transceiver unit and that are used to perform a receiving action. The sending unit may be replaced by a transmitter, and the receiving unit may be replaced by a receiver, to respectively perform sending and receiving operations and related processing operations in the method embodiments.

In this embodiment of this application, the apparatus 700 may alternatively be a chip or a chip system, for example, a system on chip (system on chip, SoC). Correspondingly, the transceiver unit 701 may be a transceiver circuit of the chip. This is not limited herein.

FIG. 8 is a block diagram of another cell handover apparatus 800 according to an embodiment of this application. The apparatus 800 includes a processor 801, a transceiver 802, and a storage 803. The processor 801, the transceiver 802, and the storage 803 communicate with each other through an internal connection path. The storage 803 is configured to store instructions. The processor 801 is configured to execute the instructions stored in the storage 803, to control the transceiver 802 to receive and/or send a signal.

It should be noted that the apparatus 800 may be specifically the terminal device in the foregoing embodiments, and may be configured to perform steps and/or procedures that correspond to the terminal device in the foregoing method. Optionally, the storage 803 may include a read-only memory and a random access memory, and provide instructions and data to the processor 801. A part of the storage may further include a non-volatile random access memory. For example, the storage 803 may further store information of a device type. The processor 801 may be configured to execute the instructions stored in the storage 803. When the processor 801 executes the instructions stored in the storage, the processor 801 is configured to perform the steps and/or the procedures in the method 800. The transceiver 802 may include a transmitter and a receiver. The transmitter may be configured to implement steps and/or procedures that correspond to the transceiver and that are used to perform a sending action. The receiver may be configured to implement steps and/or procedures that correspond to the transceiver and that are used to perform a receiving action.

It should be understood that in embodiments of this application, the processor may be a central processing unit (central processing unit, CPU), or the processor may be another general purpose processor, a digital signal processor (DSP), an application-specific integrated circuit (ASIC), a field programmable gate array (FPGA) or another programmable logic device, a discrete gate or transistor logic device, a discrete hardware component, or the like. The general-purpose processor may be a microprocessor, or the processor may be any conventional processor or the like.

In an implementation process, steps in the foregoing methods can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the storage, and a processor reads instructions in the storage and completes the steps in the foregoing methods in combination with hardware of the processor. To avoid repetition, details are not described herein again.

This application further provides a computer-readable storage medium. The computer-readable storage medium is configured to store a computer program, and the computer program is used for implementing the method in the foregoing embodiments.

This application further provides a computer program product. The computer program product includes a computer program (which may also be referred to as code or an instruction). When the computer program is run on a computer, the computer may perform the method in the foregoing embodiments.

A person of ordinary skill in the art may be aware that, in combination with the examples described in embodiments disclosed in this specification, modules and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and module, refer to a corresponding process in the foregoing method embodiments, and details are not described herein again.

In the several embodiments provided in this application, it should be understood that the disclosed system, apparatus, and method may be implemented in other manners. For example, the apparatus embodiments described above are merely examples. For example, division of modules is merely logical function division. In an actual implementation, there may be another division manner. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

The modules described as separate parts may or may not be physically separate, and parts displayed as modules may or may not be physical modules, may be located in one position, or may be distributed on a plurality of network modules. Some or all the modules may be selected according to actual needs to achieve the objectives of the solutions of embodiments.

In addition, functional modules in this application may be integrated into one processing module, or each of the modules may exist alone physically, or two or more modules are integrated into one module.

When the functions are implemented in the form of a software functional module and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for indicating a computing device (which may be a personal computer, a server, or a network device) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A cell handover method, comprising:
receiving, by a terminal device, a handover command from an access network device, wherein the handover command indicates the terminal device to perform handover from a source cell group to a target cell group, and the source cell group and the target cell group each comprise one or more cells;
based on configuration information of the source cell group and configuration information of the target cell group, canceling, by the terminal device, a triggered first buffer status report BSR and/or deleting a data packet corresponding to a first hybrid automatic repeat request HARQ process, wherein the first BSR is all or a part of BSRs triggered by the terminal device in the source cell group, and the first HARQ process is all or a part of HARQ processes of the terminal device in the source cell group; and
performing, by the terminal device, handover to the target cell group based on the handover command.

2. The method according to claim 1, wherein the configuration information of the source cell group comprises information indicating a logical channel of the source cell group, and the configuration information of the target cell group comprises information indicating a logical channel of the target cell group; and
the first BSR comprises a regular BSR triggered for a first logical channel, and the first logical channel comprises a logical channel that exists in the source cell group but does not exist in the target cell group.

3. The method according to claim 2, wherein the first logical channel further comprises a logical channel that exists in both the source cell group and the target cell group but does not belong to any logical channel group in the target cell group.

4. The method according to claim 2 or 3, wherein the configuration information of the target cell group further comprises information indicating whether a scheduling request SR delayed triggering characteristic is enabled for each of at least one logical channel of the target cell group; and
the method further comprises:
determining, by the terminal device based on the configuration information of the target cell group, whether an SR delayed triggering characteristic is enabled for a second logical channel corresponding to a regular BSR that is uncanceled and that is triggered for the second logical channel in the target cell group; and
if an SR delayed triggering characteristic is enabled for the second logical channel in the target cell group, after the terminal device performs handover to the target cell group, restarting, by the terminal device, a timer corresponding to the second logical channel.

5. The method according to any one of claims 1 to 4, wherein the first BSR comprises a triggered padding BSR.

6. The method according to any one of claims 1 to 5, wherein the first BSR does not comprise a triggered periodic BSR.

7. The method according to any one of claims 1 to 6, wherein the method further comprises:
continuing, by the terminal device, to maintain a variable corresponding to a logical channel that exists in both the source cell group and the target cell group, wherein the variable is used for determining a transmission priority of the logical channel corresponding to the variable in uplink transmission.

8. The method according to any one of claims 1 to 7, wherein the source cell group and the target cell group each comprise one cell, and the first HARQ process comprises a HARQ process that exists in the source cell group but does not exist in the target cell group.

9. The method according to any one of claims 1 to 7, wherein the source cell group and/or the target cell group comprise/comprises a plurality of cells; and
the first HARQ process comprises:
a HARQ process corresponding to a HARQ entity corresponding to a cell that belongs to the source cell group but does not belong to the target cell group; and
a HARQ process that exists in a HARQ entity in the source cell group but does not exist in a HARQ entity in the target cell group in HARQ entities corresponding to cells that belong to both the source cell group and the target cell group.

10. A cell handover method, comprising:
receiving, by a terminal device, a handover command from an access network device, wherein the handover command indicates the terminal device to perform handover from a source cell group to a target cell group, and the source cell group and the target cell group each comprise one or more cells;
canceling, by the terminal device, all triggered buffer status reports BSRs;
performing, by the terminal device, handover to the target cell group based on the handover command; and
triggering, by the terminal device, a BSR based on a handover behavior of the terminal device, or triggering, by the terminal device, a BSR based on a handover behavior of the terminal device in either of the following cases:
to-be-transmitted data exists on any logical channel that belongs to any logical channel group in the target cell group; or
to-be-transmitted data exists on any logical channel in the target cell group.

11. A cell handover apparatus, comprising:
a transceiver unit, configured to receive a handover command from an access network device, wherein the handover command indicates the apparatus to perform handover from a source cell group to a target cell group, and the source cell group and the target cell group each comprise one or more cells; and
a processing unit, configured to: based on configuration information of the source cell group and configuration information of the target cell group, cancel a triggered first buffer status report BSR and/or delete a data packet corresponding to a first hybrid automatic repeat request HARQ process, wherein the first BSR is all or a part of BSRs triggered by the apparatus in the source cell group, and the first HARQ process is all or a part of HARQ processes of the apparatus in the source cell group; and perform handover to the target cell group based on the handover command.

12. The apparatus according to claim 11, wherein the configuration information of the source cell group comprises information indicating a logical channel of the source cell group, and the configuration information of the target cell group comprises information indicating a logical channel of the target cell group; and the first BSR comprises a regular BSR triggered for a first logical channel, and the first logical channel comprises a logical channel that exists in the source cell group but does not exist in the target cell group.

13. The apparatus according to claim 12, wherein the first logical channel further comprises a logical channel that exists in both the source cell group and the target cell group but does not belong to any logical channel group in the target cell group.

14. The apparatus according to claim 12 or 13, wherein the configuration information of the target cell group further comprises information indicating whether a scheduling request SR delayed triggering characteristic is enabled for each of at least one logical channel of the target cell group; and
the processing unit is further configured to determine, based on the configuration information of the target cell group, whether an SR delayed triggering characteristic is enabled for a second logical channel corresponding to a regular BSR that is uncanceled and that is triggered for the second logical channel in the target cell group; and if an SR delayed triggering characteristic is enabled for the second logical channel in the target cell group, after the apparatus performs handover to the target cell group, restart a timer corresponding to the second logical channel.

15. The apparatus according to any one of claims 11 to 14, wherein the first BSR comprises a triggered padding BSR.

16. The apparatus according to any one of claims 11 to 15, wherein the first BSR does not comprise a triggered periodic BSR.

17. The apparatus according to any one of claims 11 to 16, wherein the processing unit is further configured to:
continue to maintain a variable corresponding to a logical channel that exists in both the source cell group and the target cell group, wherein the variable is used for determining a transmission priority of the logical channel corresponding to the variable in uplink transmission.

18. The apparatus according to any one of claims 11 to 17, wherein the source cell group and the target cell group each comprise one cell, and the first HARQ process comprises a HARQ process that exists in the source cell group but does not exist in the target cell group.

19. The apparatus according to any one of claims 11 to 17, wherein the source cell group and/or the target cell group comprise/comprises a plurality of cells; and
the first HARQ process comprises:
a HARQ process corresponding to a HARQ entity corresponding to a cell that belongs to the source cell group but does not belong to the target cell group; and
a HARQ process that exists in a HARQ entity in the source cell group but does not exist in a HARQ entity in the target cell group in HARQ entities corresponding to cells that belong to both the source cell group and the target cell group.

20. A cell handover apparatus, comprising:
a transceiver unit, configured to receive a handover command from an access network device, wherein the handover command indicates the apparatus to perform handover from a source cell group to a target cell group, and the source cell group and the target cell group each comprise one or more cells; and
a processing unit, configured to cancel all triggered buffer status reports BSRs; perform handover to the target cell group based on the handover command; and trigger a BSR based on a handover behavior of the apparatus, or trigger a BSR based on a handover behavior of the apparatus in either of the following cases: to-be-transmitted data exists on any logical channel that belongs to any logical channel group in the target cell group; or to-be-transmitted data exists on any logical channel in the target cell group.

21. A cell handover apparatus, comprising a processor, wherein the processor is coupled to a storage, the storage is configured to store a computer program, and when the processor invokes the computer program, the terminal device is enabled to perform the method according to any one of claims 1 to 10.

22. A computer-readable storage medium, configured to store a computer program, wherein the computer program comprises instructions used for implementing the method according to any one of claims 1 to 10.

23. A computer program product, wherein the computer program product comprises computer program code, and when the computer program code is run on a computer, the computer is enabled to perform the method according to any one of claims 1 to 10.
